# EUROPEAN PATENT APPLICATION

(11) **EP 4 635 999 A1**
(43) Date of publication of application: **22.10.2025**
(21) Application number: 24305610.8
(22) Date of filing: 18.04.2024
(51) Int. Cl.: C08G 18/20, C08G 18/48, C08G 18/76, C09J 175/08, C08G 18/10

(54) **ENGINEERED WOOD MOISTURE CURE POLYURETHANE ADHESIVE**

(71) Applicant: ARKEMA FRANCE, 92800 Puteaux (FR)
(72) Inventor: WANG, Xianping, Dublin, 43016 (US); ZHU, Tianxia, Dublin, 43016 (US)
(74) Representative: Bandpay & Greuter

(57) **Abstract**

The invention relates to an adhesive composition. The composition may include a prepolymer comprising a reaction product of a 1^{st} polyol and a polymeric isocyanate. The polyol may have a number average molecular of at least about 2000 Daltons. The 1^{st} polyol may also have a hydroxyl functionality of at least about 2.0. The polymeric isocyanate may have a functionality of at least about 2.8, preferably, optionally a 4,4' MDI monomeric content of less than about 50 wt%, and optionally a 2,4' MDI monomeric content of less than about 30 wt%. Optionally, the adhesive composition may include a curative having a 2^{nd} polyol. The 2^{nd} polyol may be the same or different than the 1^{st} polyol. For embodiments that include the curative a weight ratio of the prepolymer to the curative may comprise up to about 10:1. A wt% of the polymeric isocyanate in the adhesive composition based on the amount of the polymeric isocyanate, the 1^{st} polyol and the 2^{nd} polyol, when present, comprises more than 60%.

## Description

### TECHNICAL FIELD

The present invention relates to adhesive compositions for engineered wood products, laminates, especially laminates constructed from engineered wood, that include one or more of the adhesive compositions and methods of making the laminate.

### TECHNICAL BACKGROUND

Engineered wood is used in a variety of applications, from home construction to commercial buildings to industrial products. Some advantages of engineered wood products may include:
- Engineered wood can be sustainable. Also, it reduces waste because it uses all parts of the tree, even defects or pieces leftover from cutting dimensional lumber can be used to products.
- Polyurethane based engineered wood can be stronger than traditional lumber in a desired direction or configuration by creating laminated products having high density and layers of grain running in different directions.
- Engineered beams can come in almost any size, the beam is not limited by the length of the source tree.

However, engineered wood is typically more expensive that traditional lumber. In addition to the added expense, disadvantages of polyurethane bonded engineered wood products include at least the heat resistance is typically less than desirable, in many cases less than that of traditional lumber. Also, the engineered wood product may have inferior mechanical properties.

It has now been found that engineered wood products that include the below adhesive composition can overcome the above drawbacks.

### BRIEF DESCRIPTION

An embodiment disclosed herein relates to an adhesive composition. The composition may include a (a) prepolymer comprising a reaction product of a 1^{st} polyol having a number average molecular weight of at least about 2000 Daltons and a hydroxyl functionality of at least about 2.0 and a polymeric isocyanate having a functionality of at least about 2.8, optionally a 4,4' monomeric MDI comprises less than about 50 wt% and optionally a 2,4' MDI monomeric content comprises less than about 30 wt%.

Optionally the composition may include a curative comprising a 2^{nd} polyol. The 2^{nd} polyol may be the same or different than the 1^{st} polyol.

In the particular embodiment which includes the curative a weight ratio of prepolymer to curative comprises up to about 10:1.

The embodiments disclosed herein may further include a laminate. The laminate may include 1^{st} and 2^{nd} substrates. The above adhesive composition may be sandwiched between the 1^{st} and the 2^{nd} substrates.

The embodiments herein also include a method of making the laminate. In this embodiment, the above adhesive composition is applied to at least one of the 1^{st} and the 2^{nd} substrates. The 1^{st} and the 2^{nd} substrates are pressed together to thereby form a laminate wherein the adhesive composition is sandwiched between the 1^{st} and the 2^{nd} substrates.

The present invention makes it possible to address the needs mentioned above. In particular, the adhesive composition according to the invention surprisingly offers one or more of enhanced heat resistance, improved wet strength (initial bond strength), compatibility with high-speed manufacturing process and combinations of the advantages.

### DESCRIPTION OF THE INVENTION

The invention relates to adhesive compositions. A polyurethane adhesive is an exemplary class of the adhesives. The polyurethane adhesive may be a 1-component or a 2-component adhesive.

The adhesive composition (also referred to as "polyurethane adhesive composition" in the present text) may include a prepolymer comprising a reaction product of a 1^{st} polyol and a polymeric isocyanate. The 1^{st} polyol may have a number average molecular weight of at least about 2000 Daltons, preferably more than about 3000 Daltons, more preferably more than 4500 Daltons, and even more preferably more than about 6000 Daltons. Examples of polyols having a number average molecular weight of at least 6000 include Acclaim^{®} 6300, 8200 and 12200, all available from Covestro. The polyol may also have a hydroxyl functionality of at least about 2.0, preferably more than about 2.5, more preferably more than about 2.7, even more preferably more than about 2.8 and further preferred at least about 3.0.

The polyol is preferably selected from the group of polyether polyols, polyester polyols and combinations thereof. Useful polyether polyols can be obtained from the polymerization of a cyclic oxide, e.g., ethylene oxide, propylene oxide, butylene oxide, and tetrahydrofuran, or by the addition of one or more such oxides to polyfunctional initiators having at least two active hydrogens including, e.g., water, polyhydric alcohols (e.g., ethylene glycol, propylene glycol, diethylene glycol, cyclohexane dimethanol, glycerol, trimethylol-propane, pentaerythritol and bisphenol A, ethylenediamine, propylenediamine, triethanolamine, and 1,2-propanedithiol. Particularly useful polyether polyols include, e.g., polyoxypropylene diols and triols, poly(oxyethylene-oxypropylene) diols and triols obtained by the simultaneous or sequential addition of ethylene oxide and propylene oxide to appropriate initiators, and polytetramethylene ether glycols obtained by the polymerization of tetrahydrofuran. Examples of preferred polyether polyols include a polyalkylene oxide, such as polypropylene oxide, poly(ethylene oxide) and ethylene oxide/propylene oxide copolymer.

According to another embodiment of the present disclosure, the polyester polyol is selected from the group consisting of polyglycols dicarboxylates, polycaprolactone polyols, polycaprolactone and a combination thereof.

Useful polyester polyols are prepared from the reaction product of polycarboxylic acids, their anhydrides, their esters or their halides, and a stoichiometric excess polyhydric alcohols. Suitable polycarboxylic acids include dicarboxylic acids and tricarboxylic acids including, e.g., aromatic dicarboxylic acids, anhydrides and esters thereof (e.g. terephthalic acid, isophthalic acid, dimethyl terephthalate, diethyl terephthalate, phthalic acid, phthalic anhydride, methyl-hexahydrophthalic acid, methyl-hexahydrophthalic anhydride, methyl-tetrahydrophthalic acid, methyl - tetrahydrophthalic anhydride, hexahydrophthalic acid, hexahydrophthalic anhydride, and tetrahydrophthalic acid), aliphatic dicarboxylic acids and anhydrides thereof (e.g. maleic acid, maleic anhydride, succinic acid, succinic anhydride, glutaric acid, glutaric anhydride, adipic acid, hexanoic acid, pimelic acid, suberic acid, azelaic acid, sebacic acid, chlorendic acid, 1,2,4-butane-tricarboxylic acid, decanedicarboxylic acid, octadecanedicarboxylic acid, dimeric acid, dimerized fatty acids, trimeric fatty acids, and fumaric acid), and alicyclic dicarboxylic acids (e.g. 1,3-cyclohexanedicarboxylic acid, and 1,4-cyclohexanedicarboxylic acid)

Examples of suitable polyhydric alcohols from which polyester polyols can be derived include aliphatic polyols, e.g., ethylene glycols, propane diols (e.g., 1,2-propanediol and 1,3-propanediol), butane diols (e.g., 1,3-butanediol, 1,4-butanediol,), pentane diols (e.g., 1,5-pentanediol), 1,6-hexanediol, 1,8-octanediol, 1,10-decanediol, neopentyl glycol, diethylene glycol, triethylene glycol, tetraethylene glycol, polyethylene glycols, propylene glycol, polypropylene glycols (e.g., dipropylene glycol and tripropylene glycol), 1,4-cyclohexanedimethanol, 1,4-cyclohexanediol, dimer diols, bisphenol A, bisphenol F, hydrogenated bisphenol A, hydrogenated bisphenol F, glycerol, tetramethylene glycol, polytetramethylene glycol, 3-methyl-l,5-pentanediol, 1,9-nonanediol, 2-methyl-1,8-octanediol, trimethylolpropane, glycerin, pentaerythritol, sorbitol, glucose, and combinations thereof.

The polymeric isocyanate may have a functionality of at least about 2.8, preferably more than about 2.9, more preferably at least about 2.95.

Diphenylmethane diisocyanate is herein also referred to as MDI. Diphenylmethane diisocyanate (MDI) monomers can be present as a mixture of three isomers, that is, 4, 4' -diphenylmethane diisocyanate (4, 4'-MDI), 2, 4'-diphenylmethane diisocyanate (2, 4'-MDI), and 2, 2'-diphenylmethane diisocyanate (2, 2'-MDI).

The polymeric isocyanate may have a 4, 4' MDI monomeric content of less than about 50 wt%, preferably less than about 45 wt%, more preferably less than about 40 wt%, and even more preferably no more than about 35 wt%. The polymeric isocyanate may have a 2,4' MDI monomeric content of less than about 30 wt%, preferably no more than about 25 wt%, more preferably no more than about 20 wt%, even more preferably no more than about 15 wt%, further preferred no more than about 10 wt% and most preferably no more than about 7 wt%.

The weight ratio of the 4,4' MDI monomeric content to the 2,4' MDI monomeric content included in the polymeric isocyanate can optionally comprise more than about 1:1. Preferred weight ratios may comprise at least about 5:1, at least about 7:1, at least about 10:1, at least about 15:1, at least about 19:1 and at least about 20:1.

A combined amount of the 4,4' MDI monomeric content and the 2,4' MDI monomeric content included in the polymeric polyisocyanate can optionally comprise less than about 20 wt%, preferably less than about 10 wt%, more preferably less than about 5 wt%, even more preferably less than about 2 wt%, further preferably less than about 1 wt%, even further preferably less than about 0.5 wt%.

In one embodiment, the polymeric isocyanate may have an NCO content from about 10 wt% to about 35 wt% and a viscosity from about 50 mPa.s to about 1000 mPa.s. Either alternative to the NCO content and viscosity or in conjunction with, the polymeric isocyanate may have a 4, 4' MDI monomer content of no more than 65 wt%.

According to another embodiment of the present disclosure, the polymeric isocyanate is selected from the group consisting of polymeric diphenylmethane diisocyanates, polymeric toluene diisocyanates, polymeric tetramethylxylene diisocyanates and combinations thereof. The precursor (Part i) can comprise other components typically found in the prepolymer part of two-component solventless adhesives, such as polymeric isocyanates.

Polymeric isocyanates useful in the invention include polymeric isocyanates available commercially as, for example, MONDUR MR-5, MONDUR MR Light, MONDUR MRS, MONDUR 448, MONDUR 489 (available from Covestro), and the like and combinations thereof.

According to another embodiment of the present disclosure, the polymeric isocyanate is present in an amount from about 20 wt% to about 30 wt%, or from about 30 wt% to about 40 wt%, or from about 40 wt% to about 50 wt%, or from about 50 wt% to about 60 wt%, or from about 60 wt% to about 70 wt%, or from about 70wt% to about 80 wt%, or from about 80 wt% to about 90 wt% of the total weight of the prepolymer of the composition.

A further embodiment of the disclosure includes the polymeric isocyanate comprises less than about 10 wt% TDI (toluene diisocyanate). In a particular embodiment, the polymeric isocyanate may comprise no more than about 1 wt% of TDI, preferably no more than trace amounts, more preferably less than a detectable amount of TDI, most preferably free of TDI.

In the present text, the term "no more than trace amounts" preferably means an amount of at most 0.02wt %, for example at most 0.01 wt%, or substantially 0 wt.

Optionally, the polymeric isocyanate may comprise less than about 10 wt% of aliphatic isocyanate ("AC"). In a particular embodiment, the polymeric isocyanate d may comprise no more than about 1 wt% of AC, preferably no more than trace amounts, more preferably less than a detectable amount of AC, most preferably free of AC.

Also in another optional aspect, the polymeric isocyanate comprises less than about 10 wt% HDI (hexamethylene diisocyanate) trimer. In a particular embodiment, the polymeric isocyanate may comprise no more than about 1 wt% of HDI trimer, preferably no more than trace amounts, more preferably less than a detectable amount of HDI trimer, most preferably free of HDI trimer.

The adhesive composition, preferably the prepolymer, may further include a second polymeric isocyanate. The second polymeric isocyanate may have a functionality of at least about 2.7 and preferably a 4, 4' MDI monomeric content may comprise less than about 45%.

In a particular embodiment, a weight ratio of the polymeric polyisocyanate to the second polymeric polyisocyanate may comprise from about 1:6 to about 6:1, preferably from about 1:5 to about 5:1, more preferably about 4:1 to about 1:4 and more preferably about 1:3 to about 3:1. Even further preferably, the weight ratio of the polymeric polyisocyanate to the second polymeric polyisocyanate is less than about 2:1 to about 1:2, even more preferably about 1:1.

In another particular embodiment, a combined NCO functionality of the polymeric polyisocyanate and the second polymeric polyisocyanate comprises at least about 2.7, preferably at least about 2.75.

The above disclosure regarding the polymeric isocyanate is applicable to the second polymeric isocyanate and is incorporated herein by reference regarding the second polymeric isocyanate as if fully rewritten herein.

The adhesive composition may include an optional curative. The curative may include a 2^{nd} polyol. The 2^{nd} polyol may be the same or different than the 1^{st} polyol. In one particular embodiment, the 2^{nd} polyol is different than the 1^{st} polyol.

The above description regarding the 1^{st} polyol is equally applicable to the 2^{nd} polyol and is incorporated herein by reference with respect to the 2^{nd} polyol as if fully rewritten herein.

For embodiments that include the curative a weight ratio of the prepolymer to the curative may comprise up to about 10:1, preferably up to about 5:1, further preferably up to about 4:1, more preferably no lower than about 1:1, further preferably no lower than about 1.5:1 (such as from about 1:1 to about 10:1, or from about 1.5:1 to about 10:1, or from about 1:1 to about 5:1, or from about 1.5:1 to about 5:1, or from about 1:1 to about 4:1, or from about 1.5:1 to about 4:1).

The adhesive composition may further include up to about 10 wt% of a desiccant, preferably up to about 7 wt%, more preferably up to about 5 wt%, more preferably up to about 4 wt%, even more preferably up to about 3 wt%, even furthermore preferred up to about 2 wt%, most preferred up to about 1 wt%. One particular preferred type of desiccant is a molecular sieve. In a preferred embodiment, the desiccant is in the prepolymer.

The adhesive composition may further include a rheology modifier, in particular fumed silica, preferably in an amount of from 0.5 to 5 wt%, more preferably from 0.5 to less than 3 w%, typically in an amount of about 1 wt%, based on the total weight of the adhesive composition.

The adhesive composition may also include an amine compound, preferably in the curative. An example of the amine may be a polyaspartic ester. Suitable types of polyaspartic ester may be mono, di or tri functional, e.g., amine, diamine or triamine.

In particular embodiment, the polyurethane adhesive composition may have a molar ratio of NCO to OH comprising at least about 7:1, preferably at least about 10:1, more preferably at least about 15:1, even more preferably no more than about 19:1 (for example, from about 7:1 to about 19:1, preferably from about 10:1 to about 19:1, more preferably from about 15:1 to about 19:1).

In a particular embodiment, the polyurethane adhesive composition has a polyol to the polymeric polyisocyanate weight ratio of preferably no less than about 1:1.2, more preferably no less than about 1:1.5, most preferably up to about 1:2.5 (such as from about 1:1.2 to about 1:2.5, preferably from about 1:1.5 to about 1:2.5).

The amount of polymeric isocyanate in the adhesive composition is preferably more than 60 wt%, more preferably at least about 65 wt%, more preferably more than about 65 wt%, further preferably no more than about 80 wt%, even more preferably no more than about 75 wt%, even further preferably less than about 75 wt%, based on the amount of the polymeric isocyanate, the 1^{st} polyol and the 2^{nd} polyol if present (such as from more than 60 to no more than about 80 wt%, preferably from about 65 to about 75 wt%, more preferably from more than about 65 wt% to less than 75 wt%).

In an embodiment that includes the curative, a polyisocyanate isocyanate content of the adhesive composition comprises at least about 65 wt%, preferably less than about 75 wt% polymeric isocyanate (in particular, from about 65 to less than about 75 wt%).

The reaction of the 1^{st} polyol with the polymeric isocyanate can be carried out by using a catalyst. The catalyst may be used in an amount of from 0.01 to 10 wt%, preferably from 0.01 to 3 wt%, in particular from 0.05 to 1.0 wt%, based on the total weight of the adhesive composition.

The disclosure also includes embodiments of a laminate. The laminate includes 1^{st} and 2^{nd} substrates and an adhesive composition sandwiched between the 1^{st} and 2^{nd} substrates. The adhesive composition may comprise anyone of the above adhesive compositions.

At least one of the 1^{st} and 2^{nd} substrates may comprise a wooden substrate, preferably both the 1^{st} and 2^{nd} substrates comprise wooden substrates (the wooden substrates of the 1^{st} and 2^{nd} substrates being also respectively referred to as 1^{st} and 2^{nd} wooden substrates in the present text). Further, the wooden substrate may comprise an engineered wood, preferably both the 1^{st} and 2^{nd} wooden substrates comprise engineered wood.

Examples of engineered wood may include any of wood I-joists, Glulam Beams, Structural Finger Joints, Cross-Laminated Timer (CLT) or Laminated Veneer Lumber (LVL), Medium Density Fiberboard (MDF), Oriented Standard Board (OSB), Plywood, Laminated Strand Lumber (LSL).

In particular embodiments of the wooden substrate at least one of the 1^{st} and 2^{nd} substrates may comprise a substrate formed from at least one of compressed saw dust, oriented strand board and combinations thereof.

Embodiments of the laminate may include a primer on at least one of the 1^{st} or 2^{nd} substrates between either one of the 1^{st} and 2^{nd} substrates and the adhesive composition. In further particular embodiments, primer may be applied to both of the 1^{st} and 2^{nd} substrates. A first amount of the primer is disposed between the adhesive composition and the 1^{st} substrate and a second amount of primer between the 2^{nd} substrate and the adhesive composition. The first amount of primer and the second amount of primer may be the same or different. In particular embodiments the amount of primer is sufficient to assist with the adhesive bonding to one of the substrates. In particular embodiments, a weight ratio of the adhesive composition to primer comprises at least about 2:1, preferably no more than about 20:1 (for example, from about 2:1 to about 20:1).

In particular embodiments, the laminate exhibits a retained strength of more than about 25%, preferably at least about 30%, more preferably at least about 35% and even more preferably at least about 40% when determined in accordance with ASTM D 7247.

In other embodiments, the laminate may pass ICC Acceptance Criteria 14 ("AC 14").

In a further embodiment disclosed herein the laminate has an initial strength (wet strength) of at least 150 psi.

In another particular embodiment the laminate may have a tensile strength of at least about 5,333 psi at ambient temperature (preferably 20-25°C) in less than about 100 minutes, preferably no less than about 60 minutes (for example from about 60 to less than 100 min).

In an additional embodiment, the laminate has a tensile strength of at least about 4000 psi, preferably at least about 4500 psi, more preferably at least about 5000 psi and further preferably about 5333 psi. Typically tested at ambient conditions.

In a further embodiment the laminate retains more than about 20% of its strength, preferably more than about 25% and more preferably at least about 30% after exposure to test conditions according to ASTM 7247.

Unless otherwise stated, standards mentioned throughout the present application are those in effect on the date the application is filed.

By "about X", it is intended more or less 10% the value of X.

In the context of the invention, the ranges of values are understood to be inclusive. For example, the range "between 0% and 25%" includes, in particular, the values 0% and 25%.

All the embodiments described above can be combined with each other. In particular, the various aforementioned ingredients in the composition, and in particular the preferred embodiments, can be combined with each other.

The following examples illustrate the invention without limiting it.

### EXAMPLES

The engineered wood products industry has been using the ASTM D7247 for evaluating the adhesive's performance under elevated temperature. A slightly modified version of this standard test was used here to evaluate the heat performance of different samples. The lumber used to make the test specimens in the test had the annual growth rings oriented 45 to 90°, and was free of defects and at a moisture content between 10 to 12% prior to bonding. Each shear specimen was made and cut according to ASTM D905.

In the modified D7247 test, the shear blocks cut from the same layup billet were put into pairs. For each pair, one block is tested for shear strength under ambient temperature, while the other one was heated at 428°F for 2 hours, and then break immediately. The ratio of the strength of the heated samples over the ambient strength of the corresponding pair is considered as the %retention of strength, and the higher the value, the better the heat resistance. The %wood failure of the shear block tested under the elevated temperature is another indication of heat resistance, the higher the %wood failure, the better the heat resistance. As comparison, shear blocks cut from the wood used for the layups was also tested, and its %retention value indicated how much strength remaining for the wood itself after being exposed to 428°F for 2 hours.

### Comparative Examples 1-5 and Test Examples A-E

**Table 1 Comparative Examples**

| Raw Material | Trade Name if Applicable | CEx- 1 | CEx-2 | CEx-3 | CEx-4 | CEx-5 |
|---|---|---|---|---|---|---|
| Polymeric Isocyanate | Lupranate 266 | 59.2% | 72.4% | | | |
| | Mondur MRS | | | 54.2% | | |
| | Mondur CD | | | | 54.2% | |
| | Mondur MR | | | | | 54.2% |
| Polyol | PPG 4000 | | | 14.8% | | 14.8% |
| | PPG 2000 | 39.5% | | | 44.4% | 29.6% |
| Polyol Mn < 1000 Da | PEO | | 14.5% | | | |
| | Resorcinol | | 2.2% | | | |
| | Acetone | | 9.7% | | | |
| Polyether Triol Polyol Mn > 2000 Da | Multranol 3901 | | | 29.6% | | |
| Catalyst | DMDEE | 0.5% | 0.5% | 0.5% | 0.5% | 0.5% |
| Fumed Silica | R972 | 0.9% | 0.9% | 0.9% | 0.9% | 0.9% |

**Table 2 Inventive Examples**

| Raw Material | Trade Name if Applicable | Ex-A | Ex-B | Ex-C | Ex-D | Ex-E |
|---|---|---|---|---|---|---|
| Polymeric Isocyanate NCO Functionality 2.8 | Mondur MR | 41.4% | 29.6% | 40.2% | 59.2% | 70.0% |
| Polymeric Isocyanate NCO Functionality 3.0 | Mondur 489 | 29.6% | 39.4% | 28.2% | 9.9% | |
| Polyol Diol Mn ≥ 2000 Da | PPG 2000 | 27.6% | | | 17.8% | 17.8% |
| Polyether Triol Mn ≥ 2000 Da | Poly-G 83-84 | | 29.6% | 24.1% | | |
| Polyol Diol Mn ≥ 2000 Da | PPG 4000 | | | 6.0% | 11.8% | 10.9% |
| Catalyst | DMDEE | 0.5% | 0.5% | 0.5% | 0.5% | 0.5% |
| Fumed Silica | R972 | 0.9% | 0.9% | 0.9% | 0.9% | 0.9% |

**Table 2A Polymeric Isocyanate Properties**

| Type of Polymeric Isocyanate | Mondur MR | Mondur 489 |
|---|---|---|
| 4,4' Monomeric MDI Content (wt%) | >39% to < 45% | <30% |
| 2,4' Monomeric MDI Content (wt%) | <4% | <3% |
| Weight Ratio 4,4' Monomeric MDI Content to 2,4' Monomeric MDI Content | 9.0 to 12.0 | >9 to < 15 |

**Table 3 modified ASTM D 7247 Test Results**

| | CEx- 1 | CEx-2 | CEx-3 | CEx-4 | CEx-5 | Solid Wood |
|---|---|---|---|---|---|---|
| % Strength Retained after 2 hours @ 428°F (220°C) | 31% | 15% | 29% | 8% | 31% | 54% |
| % Wood Failure @ 428°F (220°C) | 37% | 8% | 8% | 8% | 30% | |
| | Ex-A | Ex-B | Ex-C | Ex-D | Ex-E | |
| % Strength Retained after 2 hours @ 428°F (220°C) | 66% | 53% | 59% | 60% | 50% | |
| % Wood Failure @ 428°F (220°C) | 91% | 71% | 67% | 78% | 35% | |

The inventive examples showed significantly better heat resistance over these comparative examples, as indicated by the much higher %remaining strength and higher wood failure%.

### ASPECTS

In addition to the claimed subject matter, the Brief Description and the Detailed Description, the disclosed subject matter includes the following aspects. Preferably, the adhesive composition disclosed herein may be a 1-component or a 2-component polyurethane adhesive.

A first aspect includes an adhesive composition, preferably a polyurethane adhesive composition. The adhesive composition may include a prepolymer comprising a reaction product of a 1^{st} polyol and a polymeric isocyanate. The polyol may have a number average molecular weight of at least about 2000 Daltons, preferably more than about 3000 Daltons, more preferably more than 4500 Daltons, and even more preferably more than about 6000 Daltons. The 1^{st} polyol may also have a hydroxyl functionality of at least about 2.0, preferably more than about 2.5, preferably more than about 2.7, even more preferably more than about 2.8 and further preferred at least about 3.0.

The polymeric isocyanate may have a functionality of at least about 2.8, preferably more than about 2.9, more preferably at least about 2.95. The polymer isocyanate may also have a 4, 4' MDI monomeric content that comprises less than about 50 wt%, preferably less than about 45 wt%, more preferably less than about 40 wt%, and even more preferably no more than about 35 wt%. The polymeric isocyanate may further have a 2,4' MDI monomeric content that comprises less than about 30 wt%, preferably no more than about 25 wt%, more preferably no more than about 20 wt%, even more preferably no more than about 15 wt%, further preferred no more than about 10 wt% and most preferably no more than about 7 wt%. Optionally a combined wt% of the 4, 4' MDI monomeric content and the 2,4' MDI monomeric content included in the polymeric polyisocyanate comprises less than about 20 wt%, preferably less than about 10 wt%, more preferably less than about 5 wt%, even more preferably less than about 2 wt%, further preferably less than about 1 wt%, even further preferably less than about 0.5 wt%.

Optionally the adhesive composition may include a curative comprising a 2^{nd} polyol. The 2^{nd} polyol may be the same or different than the 1^{st} polyol.

For embodiments that include the curative, a weight ratio of the prepolymer to the curative may comprise up to about 10:1, preferably up to about 5:1, more preferably no lower than about 1:1.

A wt% of the polymeric isocyanate in the adhesive composition based on the amount of the polymeric isocyanate, the 1^{st} polyol and the 2^{nd} polyol, when present, may comprise more than 60%, preferably at least about 65%, more preferably more than 65%, further preferably no more than about 80%, even more preferably no more than about 75%, even further preferably less than 75%.

In a second aspect applicable to the first aspect, the adhesive composition may have a molar ratio of NCO to OH of at least about 10:1, preferably at least about 15:1, even more preferably up to about 19:1.

In a third aspect applicable to the adhesive composition of any one of the preceding aspects, the adhesive composition further includes up to about 5 wt% of a molecular sieve, preferably up to about 4 wt%, even more preferably up to about 3 wt%, even furthermore preferred up to about 2 wt%, most preferred up to about 1 wt%.

In a fourth aspect applicable to any one of the preceding aspects, the 2^{nd} polyol is different than the 1^{st} polyol.

In a fifth aspect applicable to anyone of the preceding aspects, an isocyanate content of the adhesive composition comprises at least about 65% polymeric isocyanate.

A sixth aspect applicable to any one of aspects 1 to 5 wherein the adhesive composition further includes (c) a second polymeric isocyanate and a functionality of the second polymeric isocyanate comprises at least about 2.7.

A seventh aspect applies to aspect 6 wherein a 4, 4' MDI monomeric content of the second polymeric isocyanate comprises less than about 45%.

An eighth aspect is applicable to aspects 6 or 7 wherein the adhesive composition has a weight ratio of the polymeric polyisocyanate to the second polymeric polyisocyanate that comprises from about 1:6 to about 6:1, preferably from about 1:5 to about 5:1, more preferably about 4:1 to about 1:4 and more preferably about 1:3 to about 3:1.

In a ninth aspect applicable to either of aspects 6, 7 or 8, a combined NCO functionality the polymeric polyisocyanate and the second polymeric polyisocyanate comprises at least about 2.7, preferably at least about 2.75.

In a tenth aspect applicable to any one of the preceding aspects, a weight ratio of polyol to polymeric polyisocyanate comprises no less than about 1:1.2, preferably no less than about 1:1.5, more preferably no less than about 1:2.0, even more preferably up to about 1:2.5.

In an eleventh aspect, applicable to any one of the preceding aspects the adhesive composition further comprises a desiccant.

In a twelfth aspect applicable to any one of the preceding aspects, the adhesive composition comprises a 1-component polyurethane adhesive.

A thirteenth aspect includes a laminate comprising 1^{st} and 2^{nd} substrates and an adhesive composition sandwiched between the 1^{st} and 2^{nd} substrates. The adhesive composition comprises the adhesive composition of any one of the preceding aspects.

In a fourteenth aspect, the laminate of aspect 13 may further include a residual amount of primer on at least one of the 1^{st} or 2^{nd} substrates between either the one of the 1^{st} and 2^{nd} substrates and the adhesive composition.

A fifteenth aspect includes the laminate of aspect 13 wherein a weight ratio of the adhesive composition to primer comprises at least about 2:1, preferably no more than about 20:1.

A sixteenth aspect applies to anyone of aspects 13 to 15 wherein at least one of the 1^{st} and 2^{nd} substrates comprises a wooden substrate, preferably wherein both the first and second substrates comprise wooden substrates.

A seventeenth aspect applicable to the laminate of aspect 16 wherein the wooden substrate comprises an engineered wood, preferably both the 1^{st} and 2^{nd} wooden substrates comprise engineered wood.

An eighteenth aspect applies to any one of the preceding aspects 13 to 17 wherein at least one of the 1^{st} and 2^{nd} substrates comprises a substrate formed from at least one of compressed saw dust, oriented strand board and combinations thereof.

A nineteenth aspect applicable to any one of the preceding aspects 13 to 18 wherein the laminate exhibits a retained strength of more than about 25%, preferably at least about 30%, more preferably at least about 35% and even more preferably at least about 40% when determined in accordance with ASTM D 7247.

A twentieth aspect applicable to any one of aspects 13 to 19 wherein the laminate passes ICC Acceptance Criteria 14 ("AC14").

In a twenty-first aspect the laminate of any one of aspects 13-20 may have an initial strength (wet strength) of at least 150 psi.

In a twenty-second aspect, the laminate of any one of aspects 13-21 achieves a strength of at least about 5000 psi, preferably at least about 5300 psi at ambient temperature at a time of less than about 100 minutes.

In aspect twenty-three applicable to aspect 22 the time comprises no less than 60 minutes.

In aspect twenty-four applicable to aspects 13-23, the laminate retains more than about 20% of its strength, preferably more than about 25% and more preferably at least about 30% after exposure to test conditions according to ASTM 7247.

Aspect twenty-five comprises a method of making a laminate comprising the steps of applying the adhesive composition of any one of aspects 1 to 12 to at least one of a 1^{st} and a 2^{nd} substrate. The method further includes adhering the 1^{st} substrate to the 2^{nd} substrate wherein the adhesive composition is disposed between the 1^{st} and 2^{nd} substrates.

Aspect twenty-seven applicable to aspects 25 or 26 further comprising applying a primer to at least one of the 1^{st} substrate or the 2^{nd} substrate.

Aspect twenty-eight applicable to anyone of aspects 25-27 wherein a failure rate of the method comprises no more than about 15%, preferably no more than about 10%, more preferably no more than about 5% and most preferably less than about 1%.

## Claims

1. An adhesive composition comprising a (a) prepolymer comprising a reaction product of
i. a 1^{st} polyol having a number average molecular weight of at least about 2000 Daltons, preferably more than about 3000 Daltons, more preferably more than about 4500 Daltons, and even more preferably more than about 6000 Daltons and a hydroxyl functionality of at least about 2.0, preferably more than about 2.5, more preferably more than about 2.7, even more preferably more than about 2.8 and further preferred at least about 3.0, and
ii. a polymeric isocyanate
a. having a functionality of at least about 2.8, preferably more than about 2.9, more preferably at least about 2.95,
b. optionally a 4,4' MDI monomeric content comprises less than about 50 wt%, preferably less than about 45 wt%, more preferably less than about 40 wt%, and even more preferably no more than about 35 wt%,
c. optionally a 2,4' MDI monomeric content comprises less than about 30 wt%, preferably no more than about 25 wt%, more preferably no more than about 20 wt%, even more preferably no more than about 15 wt%, further preferred no more than about 10 wt% and most preferably no more than about 7 wt%,
d. optionally a weight ratio of the 4,4' MDI monomeric content to the 2,4' MDI monomeric content comprises more than about 1:1, such as at least about 5:1, preferably at least about 7:1, more preferably at least about 10:1, even more preferably at least about 15:1, further preferably at least about 19:1, and even further preferably at least about 20:1, and
e. optionally a combined wt% of the 4, 4' MDI monomeric content and the 2,4' MDI monomeric content included in the polymeric polyisocyanate comprises less than about 20 wt%, preferably less than about 10 wt%, more preferably less than about 5 wt%, even more preferably less than about 2 wt%, further preferably less than about 1 wt%, even further preferably less than about 0.5 wt%,
(b) an optional curative comprising a 2^{nd} polyol, wherein the 2^{nd} polyol may be the same or different than the 1^{st} polyol,
wherein, when the curative is present, a weight ratio of the prepolymer to the curative comprises up to about 10:1, preferably up to about 5:1, further preferably up to about 4:1, more preferably no lower than about 1.5:1,
wherein a wt% of the polymeric isocyanate in the adhesive composition based on the amount of the polymeric isocyanate, the 1^{st} polyol and the 2^{nd} polyol when present comprises more than 60%, preferably at least about 65%, more preferably more than 65%, further preferably no more than about 80%, even more preferably no more than about 75%, even further preferably less than 75%.

2. The adhesive composition of claim 1 wherein a molar ratio of NCO to OH comprises at least about 7:1, preferably at least about 10:1, more preferably at least about 15:1, and further preferably up to about 19:1.

3. The adhesive composition of any one of the preceding claims further comprising up to about 10 wt% of a molecular sieve, preferably up to about 7 wt%, even more preferably up to about 5 wt%, furthermore preferably up to about 4 wt% and most preferred up to about 2 wt%.

4. The adhesive composition of any one of the preceding claims wherein the 2^{nd} polyol differs from the 1^{st} polyol.

5. The adhesive composition of any one of the preceding claims wherein the polymeric isocyanate comprises at least about 65 wt% of the adhesive composition.

6. The adhesive composition of any one of the preceding claims further comprising (iii) a second polymeric isocyanate wherein a functionality of the second polymeric isocyanate comprises at least about 2.7.

7. The adhesive composition of claim 6 wherein a 4, 4' MDI monomeric content of the second polymeric isocyanate comprises less than about 45%.

8. The adhesive composition of either one of claims 6 or 7 wherein a weight ratio of the polymeric polyisocyanate to the second polymeric polyisocyanate comprises from about 1:6 to about 6:1, preferably from about 1:5 to about 5:1, more preferably about 1:4 to about 4:1, more preferably about 1:3 to about 3:1 and even further preferably about 1:2 to less than about 2:1, even more preferably about 1:1.

9. A laminate comprising 1^{st} and 2^{nd} substrates and a composition sandwiched between the 1^{st} and 2^{nd} substrates, wherein the composition comprises the adhesive composition of any one of the preceding claims and an optional primer.

10. The laminate of claim 9 wherein a weight ratio of the adhesive composition to the primer comprises at least about 2:1, preferably no more than about 20:1.

11. The laminate of either one of claims 9 or 10 wherein at least one of the 1^{st} and 2^{nd} substrates comprises a wooden substrate, preferably wherein both the 1^{st} and 2^{nd} substrates comprise wooden substrates.

12. The laminate of claim 11 wherein the wooden substrate comprises an engineered wood, preferably both the 1^{st} and 2^{nd} substrates comprise wooden substrates which comprise engineered wood.

13. The laminate of any one of claims 9 to 12 wherein at least one of the 1^{st} and 2^{nd} substrates comprises a substrate formed from at least one of compressed saw dust, oriented strand board and combinations thereof.

14. The laminate of any one of claims 9 to 13 wherein the laminate exhibits a retained strength of more than about 25%, preferably at least about 30%, more preferably at least about 35% and even more preferably at least about 40% when determined in accordance with ASTM D 7247.

15. The laminate of any one of claims 9 to 14 wherein the laminate passes ICC Acceptance Criteria 14 ("AC14").
